(19) Europäisches Patentamt
European Patent Office
Office européen des brevets

(11) EP 2 496 620 B1

(12) **EUROPEAN PATENT SPECIFICATION**

(45) Date of publication and mention of the grant of the patent:
**25.06.2014 Bulletin 2014/26**

(21) Application number: **10779322.6**

(22) Date of filing: **02.11.2010**

(51) Int Cl.:
*C08G 18/48* (2006.01) *C08G 18/61* (2006.01)
*C08K 5/00* (2006.01) *G02B 1/04* (2006.01)

(86) International application number:
**PCT/GB2010/002018**

(87) International publication number:
**WO 2011/051689 (05.05.2011 Gazette 2011/18)**

(54) **POLYMERS FOR CONTACT LENSES**

POLYMERE FÜR KONTAKTLINSEN

POLYMÈRES POUR LENTILLES DE CONTACT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.11.2009 GB 0919166**
**02.11.2009 GB 0919167**
**05.11.2009 GB 0919411**
**06.11.2009 GB 0919459**

(43) Date of publication of application:
**12.09.2012 Bulletin 2012/37**

(73) Proprietor: **OCUTEC LIMITED**
**ML4 3NX Scotland (GB)**

(72) Inventors:
- **RASHID, Abdul**
  **Bellshill ML4 3NX (GB)**
- **BOWERS, Roderick, William, Jonathan**
  **Bellshill ML4 3NX (GB)**
- **TIPTON, Wade**
  **Bellshill ML4 3NX (GB)**
- **GRAHAM, Neil, Bonnette**
  **Bellshill ML4 3NX (GB)**

(74) Representative: **D'Arcy, Julia**
**Harrison IP**
**1st Floor**
**Box Tree House**
**Northminster Business Park**
**Northfield Lane**
**York, YO26 6QU (GB)**

(56) References cited:
**US-B2- 6 673 273** **US-B2- 6 930 196**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 496 620 B1

## Description

The present invention relates to poly(ethylene glycol), PEG based polyurethane polymers that have applications in the field of contact lens technology. In particular, the present invention relates to PEG based polyurethane polymers comprising polyethyleneglycol dialkyl ether. The invention also relates to a process for preparing such materials, which can desirably and preferably be prepared in the complete absence of solvents.

## Background to the Invention

Soft contact lenses offer a viable alternative to spectacles for the correction of visual defects such as myopia, hypermetropia and astigmatism. Early hydrogel lenses are derived almost exclusively from hydrophilic monomers such as 2-hydroxyethyl methacrylate, (HEMA). Although these lenses provided some comfort, they did not provide sufficient oxygen permeability to prevent problems associated with corneal hypoxia. Attempts to address this problem included copolymerising HEMA with hydrophilic monomers such as methacrylic acid and N-vinyl pyrrolidone. Although these polymers increased the level of oxygen permeability, the incorporation of these comonomers also leads to problems such as protein and lipid deposition, corneal desiccation, staining and lens dehydration.

More recently, a new generation of polymers has been developed to further increase the level of oxygen. These materials are based on the copolymerisation of silicone methacrylates with hydrophilic comonomers. The lenses produced from these materials were originally designed for extended wear, though daily wear products also exist now. Although successful in further increasing the oxygen permeability, these new materials still suffer from limitations such as lipid binding and dryness, all of which decrease lens on eye comfort.

There is therefore still a need for new contact lens polymers, which offer sufficient oxygen levels for normal corneal metabolism during daily wear and for extended wear, and which provide a high level of comfort throughout the day.

One class of polymers which holds considerable promise for novel contact lens materials are PEG based polyurethanes.

Urethane chemistries have also been widely investigated in the field of biomedical devices. For example, US 3,786,034 discloses hard, hydrophilic polyurethane materials formed from reacting a specific polyol with a polyfunctional isocyanate. US 3,821,186 teaches similar such materials. Likewise, US 4,136,250 teaches a polymer formed by reacting a high molecular weight polydimethyl siloxane diol with 2 mole equivalents of isophorone di-isocyanate and then reacting with excess hydroxyl-containing monomers. Further urethane copolymers are disclosed in US 4,454,309 and US 4,359,553.

US 6,930,196 discloses polyurethane hydrogel contact lenses prepared from prepolymers made by reacting (a) at least one multifunctional compound; (b) at least one diisocyanate; and (c) at least one diol. The prepolymers so formed are then reacted with excess water to form a hydrogel polymer suitable for use as a contact lens.

US 4,644,033 discloses a polyurethane hydrogel formed from the reaction of a polyoxyethylene and a polyfunctional isocyanate in a non-aqueous solvent. The materials can be molded into contact lenses.

US 5,932,200 discloses polyurethane formed from reacting a diol component and an organic di-isocyanate with critical selection of the amount of water in the reaction mixture and the diol component. The polyurethane is in the form of a gel that has applications in bum/wound care dressings and as surgical implants.

US 4,885,966 and US 5,175,229 disclose hydrophilic polymeric soft contact lenses prepared from prepolymers that are isocyanate-capped oxyethylene-based diols or polyols having a molecular weight of about 7000 to 30,000, wherein essentially all of the OH groups are capped with isocyanate. The prepolymers are hydrated to form polyurea-polyurethane polymers that are characterised by having a non-ionic surface which is resistant to non-specific protein adsorption.

It is well known anecdotally that poly(ethylene glycol) based polyurethane copolymers are associated with poor storage stability. Known polyurethane polymers generally do not consistently maintain their properties after 6 months storage. In particular, known PEG based polyurethane polymers have a tendency not to retain their shape upon storage. In addition, stress cracks may appear on known PEG based polyurethane polymers, in particular following hydration.

The stability of polymers forming medical devices is clearly paramount. The properties of materials used in the manufacture of medical devices must be maintained upon extended periods of storage. The properties of such materials must be predictable and consistent. Materials having low and/or inconsistent storage stability are not suitable for use in the manufacture of medical devices such as contact lenses, regardless of any other promising properties.

Contact lenses having a high associated modulus are generally associated with fairly poor wearer comfort and increased risk of inflection. However, reducing the modulus of a polyurethane polymer is generally associated with adversely affecting its structural stability. Reducing the modulus of a polyurethane polymer increases the risk that the shape of an article formed from the polyurethane polymer is not maintained upon storage. Upon dry storage the shape of the article may alter, for instance changing from a circle to an oval.

The present invention seeks to provide new polyurethane-based materials that are suitable for use in the contact

lens industry. Ideally, polyurethane-based materials of the invention exhibit exemplary physical properties, in particular, in therms of modulus and water content. In addition, the polymers of the present invention generally retain their shape well upon storage and have good structural stability, for instance stress cracks do not form on the polymers of the present invention upon storage.

**Statement of Invention**

According to the present invention there is provided a polyurethane polymer composition suitable for the formation of contact lenses comprising d) at least one polyethyleneglycol dialkyl ether having the structure of formula A shown below:

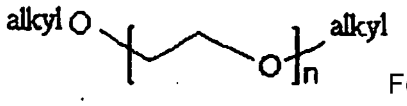

Formula A

and either ai) at least one polyethylene glycol; and

aii) at least one di-isocyanate; or

bi) at least one polyol of formula I,

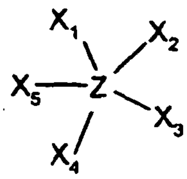

I

wherein at least three of $X_1$, $X_2$, $X_3$, $X_4$ and $X_5$ are each independently an OH-terminated group, and the remainder of $X_1$, $X_2$, $X_3$, $X_4$ and $X_5$ are each independently H or absent, and Z is a central linking unit, and

bii) at least one di- or poly-isocyanate; and

c) optionally at least one OH-terminated chain extender.

Preferably the polyethyleneglycol dialkyl ether is a polyethyleneglycol dimethyl ether compound (PEG DME) having the structure shown below:

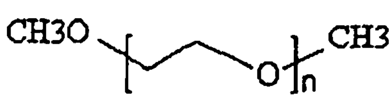

Whilst the applicant does not wish to be bound by theory, it is believed that the incorporation of polyethyleneglycol dialkyl ether (in particular PEG DME) in the reactant mixture reduces the glass transition temperature of the resultant polymeric material. The modulus of the polyurethane polymer composition is reduced accordingly. The polymeric material of the present invention is generally used to form a molded article. Moulding of the polymeric material introduces stresses, and it is believed that the introduction of polyethyleneglycol dialkyl ether allows these stresses to be dissipated. The addition of polyethyleneglycol dialkyl ether to the reactant mixture reduces subsequent stress cracking, and changes in shape of the molded article which would otherwise be likely to occur.
It is well known anecdotally that PEG based polyurethane polymers substantially fail because of poor storage

stability. No solution to this problem has currently been proposed. This has resulted in the lack of commercialisation of contact lenses formed from PEG based polyurethane polymers which have other very promising qualities (previously reported in patents such as US 6,930,196). The present invention provides an effective solution to the stability problem, whilst also providing polyurethane compositions having a predictable and controllable modulus. In particular, the modulus of the polymers of the present invention is generally relatively low compared to other polyurethane compositions having similar structural integrity.

According to a second aspect of the present invention there is provided a process for preparing a polyurethane hydrogel, said process comprising:

i) preparing a mixture of

either ai) at least one polyethylene glycol; and
aii) at least one di-isocyanate; or
bi) at least one polyol of formula I,

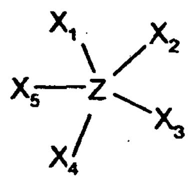

I

wherein at least three of $X_1$, $X_2$, $X_3$, $X_4$ and $X_5$ are each independently an OH-terminated group, and the remainder of $X_1$, $X_2$, $X_3$, $X_4$ and $X_5$ are each independently H or absent, and Z is a central linking unit, and
bii) at least one di- or poly-isocyanate,
c) optionally at least one OH-terminated chain extender, and
d) at least one polyethyleneglycol dialkyl ether; having the structure of formula,

ii) allowing the mixture formed in step i) to react appropriately to form a cross-linked polyurethane xerogel;
iii) hydrating the xerogel using an aqueous medium to form a hydrogel.

A third aspect of the present invention relates to a process for preparing a polyurethane xerogel in the form of a molded article, preferably in the form of a contact lens, comprising the steps of:

i) preparing a mixture of

either ai) at least one polyethylene glycol and
aii) at least one diisocyanate; or
bi) at least one polyol of formula I,

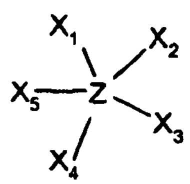

I

wherein at least three of $X_1$, $X_2$, $X_3$, $X_4$ and $X_5$ are each independently an OH-terminated group, and the remainder of $X_1$, $X_2$, $X_3$, $X_4$ and $X_5$ are each independently H or absent, and Z is a central linking unit, and
bii) at least one di- or poly-isocyanate,
c) optionally at least one OH-terminated chain extender, and
d) at least one polyethyleneglycol dialkyl ether, having the structure of formula A

ii) dispensing the reaction mixture formed in step i) into a contact lens mold;

iii) allowing the reaction mixture to react and cure (generally with the assistance with energy, in particular thermal energy or other means of radiation);

iv) removing the contact lens from the mold; and

v) hydrating the contact lens.

A fourth aspect of the present invention relates to the use of a polymer as described above in the preparation of a contact lens.

## Detailed Description

### Definitions

The "functionality" of the poly-isocyanate compound refers to the number of NCO groups present in the poly-isocyanate compound.

"Polyfunctional" is generally used to refer to a molecule, or a mixture of molecules having more than 2 functional groups that are capable of reacting in the system.

"Difunctional" is generally used to refer to a molecule or a mixture of molecules having 2 functional groups that are capable of reacting in the system.

"DK" is a measure of the oxygen permeability of a material provided in Barrer units where 1 Barrer = $10^{-11}$ $cm^2$.mL.mmHg.

The term "hydrogel" is used herein to refer to a polymer comprising 10 wt% or more water. A hydrogel in an aqueous medium will absorb water and retain its original dry shape but it will be enlarged. It will not dissolve in water to form a fluid solution unless it is significantly degraded.

The term "xerogel" is used herein to refer to a polymeric material which may form a hydrogel upon contact with sufficient water. Generally a xerogel is dry and comprises less than 5 wt% water.

The term "substantially anhydrous" is used herein to refer to conditions in which the amount of water is sufficiently low so as to produce a polyurethane backbone that is substantially free from urea groups. Preferably the amount of water in the reactant mixture is less than about 0.3 wt. %, more preferably less than about 0.1 wt. %, even more preferably less than about 0.05 wt. %.

"Polyol" is referred to herein as a compound having more than 2 available hydroxyl groups. Polyols generally have a molecular weight less than or equal to 1000.

"Macropolyol" is generally used to refer to a compound having more than 2 available hydroxyl groups linked to polyethylene oxide and/or poly propylene oxide homo or copolymer and generally has a molecular weight greater than 1000.

"Diol" is referred to herein as a compound having 2 available hydroxyl groups.

The term "carbinol" is used to refer to a hydroxyl functional group attached to a carbon atom. The carbon atom may be attached to a carbon atom (in particular a carbon atom forming part of a hydrocarbon group), a non-carbon atom including Si, N and O.

The term "small alkyl group" refers to an alkyl group having a carbon backbone of 1 to 6 carbon atoms, typically 1 to 4 carbon atoms.

The term "reaction compression molding" (RCM) is used to refer to molding techniques which involve the steps of mixing the reactants together, dispensing the reactant mixture into a mold and allowing the reactant mixture to react and cure (generally with the assistance with energy, in particular thermal energy or other means of radiation).

The term "infection molding" (IM) is used to refer to molding techniques which involve the steps of mixing the reactants together and allowing a polymerisation reaction to occur prior to dispensing into a mold.

### Polymer Composition

As noted above, the present invention provides a polyurethane polymer composition comprising polyethyleneglycol dialkyl ether. Typically the alkyl group of the polyethyleneglycol dialkyl ether is a small alkyl group comprising no more than 1 to 6 carbon atoms, suitably 1 to 4 carbon atoms. According to one embodiment, the polyethyleneglycol dialkyl ether is polyethyleneglycol dimethyl ether (PEG DME) or polyethyleneglycol dibutyl ether.

The polyurethane composition is generally prepared by reacting a mixture comprising:

a) at least one polyethylene glycol or at least one polyol of formula I,

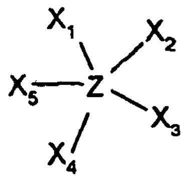

I

wherein at least three of $X_1$, $X_2$, $X_3$, $X_4$ and $X_5$ are each independently an OH-terminated group, and the remainder of $X_1$, $X_2$, $X_3$, $X_4$ and $X_5$ are each independently H or absent, and Z is a central linking unit;
b) at least one di- or poly-isocyanate;
c) optionally at least one OH-terminated chain extender; and
d) at least one polyethyleneglycol dialkyl ether of formula A.

The incorporation of polyethyleneglycol dialkyl ether into the reaction mixture reduces the modulus of the resultant composition whilst maintaining or increasing the structural integrity of the resultant composition. The resultant polyurethane composition is thus particularly suited to applications requiring compatibility in or on the human or animal body as a low modulus increases comfort and reduces the risk of infection. The degradation of the resultant polymer composition upon storage is also minimised providing a further advantage over known polyurethane compositions.

The addition of polyethyleneglycol dialkyl ether is believed to reduce the glass transition temperature of the resultant polymeric composition, thereby reducing the modulus. The polymeric composition of the present invention is generally used to form a molded article, and the molding of the polymeric composition introduces stresses. The stresses introduced are particularly marked where the article is molded through injection molding processes. In particular, stress cracking often appears upon hydration of known PEG based polyurethane polymers. The introduction of polyethyleneglycol dialkyl ether into the reaction mixture allows the stresses introduced through molding of the polymeric material to be dissipated. This greatly increases the structural integrity of molded articles formed from the polymeric material of the present invention. In particular, the shape of the molded articles generally doesn't change upon storage, and stress cracks are not formed upon hydration of the molded article.

The polymer of the present invention may be molded using reaction compression molding (RCM). As both ends of the polyethyleneglycol dialkyl ether compound of formula A are capped with alkyl chains, this compound does not take part in the polymerizing reaction. As such, this compound may act as a diluent or solvent. For RCM techniques it is advantageous for the reactant mixture to be dispensed into the mold at or around ambient temperature. Advantageously, the reactant mixture may be dispensed into the mold from around 20 to around 40 °C. The incorporation of polyethyleneglycol dialkyl ether generally reduces the viscosity of the reactant mixture, and allows the polymeric material to be dispensed into the molds at lower temperatures. In addition, by lowering the viscosity of the reactant mixture, a homogenous mixture of the reactants may be obtained more easily. A lower viscosity mixture may be dispensed into molds more easily and is easier to mold to the required shape. In particular, thin molded articles (such as thin contact lenses) may easily be formed. The incorporation of polyethyleneglycol dialkyl ether to the reaction mixture also reduces the initial rate of reaction, and the gelation time of the reactant mixture is also extended thereby allowing more time to dispense.

The surface of articles formed from the PEG based polyurethane compositions of the present invention is likely to be more hydrophilic than PEG based polyurethane compositions which do not comprise polyethyleneglycol dialkyl ether. This means that such articles are more compatible for use in or on a human or animal body.

Generally, the incorporation of a polyethyleneglycol dialkyl ether compound increases the water content of the resultant polyurethane composition upon hydration. The oxygen permeability of the polyurethane composition may also be increased.

According to a further aspect of the present invention there is provided a contact lens formed from the polymer composition. The properties of such a contact lens are extremely promising. The tensile properties of the lenses are good, with the modulus typically 0.4 to 0.6 MPa, generally around 0.5 MPa. Such a relatively low modulus is an attribute commonly associated with improved comfort and decreased risk of infection. Contact lenses formed from the polymer of the present invention generally have a water content of 50 to 70 wt %, typically around 60 wt %, and this is considered desirable in terms of the industry standard. The oxygen permeability of contact lenses formed from the polymer of the present invention is generally at least as high, or higher than most hydrogel contact lenses. The DK value of the polymer of the present invention is typically 20 to 40 Barrer, generally 25 to 35 Barrer, suitably around 30 Barrer. The structural integrity of such lenses upon storage and/or hydration is also considered to be better than known polyurethane lenses.

**Polyethyleneglycol Dialkyl Ether Compound**

The polyethyleneglycol dialkyl ether compound has the structure shown below:

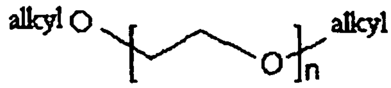

Suitably the polyethyleneglycol dialkyl ether is a polyethyleneglycol dibutyl ether compound or a polyethyleneglycol dimethyl ether compound (PEG DME). Preferably the polyethyleneglycol dialkyl ether is a PEG DME compound having the structure shown below:

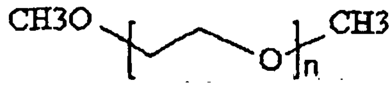

Due to the polyethyleneglycol backbone of the polyethyleneglycol dialkyl ether, this compound is very compatible with the polyethylene glycol or polyol compounds used to form the polyurethane composition of the present invention. Due to the presence of the two terminal alkyl groups, the polyethyleneglycol dialkyl ether does not participate directly in the polymerization reaction, but affects the properties of the resultant polymer composition.

The polyethyleneglycol dialkyl ether acts primarily as a modulus modifier and/or placticizer. However, the incorporation of this compound also affects other properties of the polyurethane composition. The polyethyleneglycol dialkyl ether may act as a humectant, lubricant, process aid, viscosity reducer, compatibility enhancer and/or polymer matrix structure modifier. Advantageously, the polyethyleneglycol dialkyl ether also increases the oxygen permeability of the polyurethane composition.

The concentration of the polyethyleneglycol dialkyl ether in a given composition can be adjusted to obtain the required modulus of the material, resulting in a medical device which is compatible for use in or on the body. In particular such a composition would provide a contact lens which is comfortable to wear.

Preferably, the polyethyleneglycol dialkyl ether is present in an amount of about 0.5 to about 20 wt %, more preferably from about 2.5 to about 10 wt %, more preferably still, about 4 to about 6 wt % of the reactants.

Polyethyleneglycol dialkyl ether compounds of various molecular weights are suitable for use in the present invention. Typically the molecular weight of the polyethyleneglycol dialkyl ether is 100 to 5000 including e.g. 250, 500, 1000, 2000. Suitably the molecular weight is 100 to 1000, more suitably 200 to 400, preferably around 250.

Advantageously, the incorporation of polyethyleneglycol dialkyl ether compounds into the polymer compositions of the invention results in a polyurethane composition having a reduced modulus. Typically the modulus of a polyurethane composition is reduced by at least 10% upon incorporation of a polyethyleneglycol dialkyl ether compound compared to an equivalent composition absent a polyethyleneglycol dialkyl ether compound, suitably the modulus is reduced by at least 15%, more suitably by at least 20%.

Preferably, the modulus of lenses prepared from the polymer compositions of the invention is from about 0.1 to about 0.8 MPa, more preferably, about 0.3 to about 0.5 MPa.

Advantageously, the incorporation of polyethyleneglycol dialkyl ether compounds into the polymer compositions of the invention results in a polyurethane composition having an increased oxygen permeability. Typically the oxygen permeability of a polyurethane composition is increased by at least 10% upon incorporation of a polyethyleneglycol dialkyl ether compound compared to an equivalent composition absent a polyethyleneglycol dialkyl ether compound, suitably the oxygen permeability is increased by at least 15%, more suitably by at least 20%.

Generally the polyurethane composition of the present invention has an associated DK value of 20 to 40 Barrer, suitably 30 to 35 Barrer, typically around 30 Barrer.

The incorporation of one or more polyethyleneglycol dialkyl ether compounds may reduce the viscosity of the reactant mixture, and may also increase the working time associated with the reaction mixture by the small reduction of the concentration of the reactive groups. This is advantageous as it means that the reaction mixture can be dispensed in molds more easily than when using high viscosity compositions. The gelation time of the reaction mixture is also extended thereby allowing more time to dispense.

Generally the reaction mixture is liquid at ambient temperature and may be dispensed at ambient temperature (20 to 30 °C) or slightly higher (up to 40 °C).

According to one embodiment, the incorporation of polyethyleneglycol dialkyl ether results in a reduction of the viscosity of the reactant mixture of at least 5%, typically 5 to 10%.

The incorporation of polyethyleneglycol dialkyl ether into the polymeric compounds of the present invention increases the hydrophilicity of the surface of the polymeric compounds. Generally the hydrophilicity of the surface of the

polymeric compounds is increased by around 5 to 10%.

The potential water content of resultant compositions following hydration is also generally increased through the use of polyethyleneglycol dialkyl ether compounds, particularly when higher molecular weight PEG is used in a .given composition.

According to one embodiment, the incorporation of polyethyleneglycol dialkyl ether compounds into the polymer compositions of the invention results in a polyurethane composition having an increased water content following hydration. Typically the water content of a polyurethane composition is increased by at least 10% upon incorporation of a polyethyleneglycol dialkyl ether compound compared to an equivalent composition absent a polyethyleneglycol dialkyl ether compound, suitably the water content is increased by at least 15%, more suitably by at least 20%.

The water content of a polyurethane composition of the present invention is typically 10 to about 90 weight % following hydration, more preferably, from about 20 to about 80 weight %, more preferably, from about 25 to about 75 weight %, even more preferably, from about 30 to about 70 weight %, more preferably still, from about 40 to about 70 weight %. Generally, following hydration, the polyurethane composition of the present invention comprises from about 50 to about 70 weight % water.

The equilibrium water content of a polyurethane composition is a function of the material properties and plays a key role in determining the bulk, mechanical and physical properties of the material. Water provides the medium to transmit oxygen. Where the polyurethane composition is in the form of a contact lens, the water content and the modulus govern the on-eye properties of the lens.

**Polyethylene Glycol**

The present invention may involve the use of at least one polyethylene glycol (PEG).

Polyethylene glycols of varying molecular weights are commercially available and can be used to afford the polymeric materials of the present invention. Blends of two or more different molecular weight polyethylene glycols can also be used.

Preferably, the polyethylene glycol compound has a molecular weight of from about 500 to about 100,000, more preferably from about 1000 to about 50,000, even more preferably from about 3000 to about 10,000, more preferably still from about 5000 to about 8000.

In one highly preferred embodiment, the polyethylene glycol is PEG 6000. In another highly preferred embodiment, the PEG is selected from PEG 6088, PEG 3350 and PEG 1000.

According to one embodiment, more than one PEG compound may be used. Typically, the composition may comprise one .low molecular weight PEG compound and one high molecular weight PEG compound. The low molecular weight PEG compound may have a molecular weight of less than 1500, generally less than 1000, suitably 800 to 900. The high molecular weight PEG compound may have a molecular weight of 2000 to 20000, suitably from about 5000 to about 8000.

Preferably, the polyethylene glycol is used in an amount of from about 20 to about 80 wt % of the reactants, more preferably from about 30 to about 70 wt %, more preferably from about 35 to about 60 wt %, more preferably still, from about 40 to about 60 wt % of the reactants.

Generally where the reaction mixture comprises at least one polyethylene glycol compound, a di-isocyanate is used.

**Polyol**

The present invention may involve the use of at least one polyol of formula I,

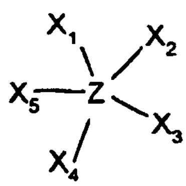

I

wherein at least three of $X_1$, $X_2$, $X_3$, $X_4$ and $X_5$ (i.e. three, four or five) are each independently an OH-terminated group, and the remainder of $X_1$, $X_2$, $X_3$, $X_4$ and $X_5$ are each independently H or absent, and Z is a central linking unit.

Generally one or more of $X_1$, $X_2$, $X_3$, $X_4$ and $X_5$ are each independently an OH-terminated polyoxyalkylene group. Typically at least three of $X_1$, $X_2$, $X_3$, $X_4$ and $X_5$ (i.e. three, four or five) are each independently an OH-terminated

polyoxyalkylene group.

The polyol of formula I is preferably a macropolyol. As used herein, the term "macropolyol" refers to a macromer bearing multiple OH functionalities.

As used herein, the term "macromer" (also referred to as "macromonomer") refers to a polymer or oligomer that has a functional group capable of participating in further polymerisation.

Preferably, the polyoxyalkylene groups are polymers and/or co polymers of ethylene oxide and/or propylene oxide in which the terminal hydroxyl groups maybe primary or secondary hydroxyls, or a mixture thereof. More preferably, the polyoxyalkylene groups are OH-terminated polyoxyalkylene groups selected from polyoxyethylene and polyoxypropylene units, or a mixture thereof.

The polyol of formula I can be derived from various multi hydroxy compounds e.g. a polyol comprising three polyoxyalkylene groups can be derived from trimethyol propane, a polyol comprising four polyoxyalkylene groups can be derived from pentaerythritol, and a polyol comprising five polyoxyalkylene groups can be derived from pentanepentols and/or from sugar molecules bearing at least five hydroxy groups.

In one preferred embodiment, Z is a pentavalent central linking unit and each of $X_1$, $X_2$, $X_3$, $X_4$, and $X_5$ is independently an OH-terminated polyoxyalkylene group.

In one preferred embodiment, Z is a tetravalent central linking unit, each of $X_1$, $X_2$ and $X_3$ and $X_4$ is independently an OH-terminated polyoxyalkylene group and $X_5$ is absent.

In one preferred embodiment, Z is a trivavalent central linking unit, each of $X_1$, $X_2$ and $X_3$ is independently an OH-terminated polyoxyalkylene group, and $X_4$ and $X_5$ are absent.

In one preferred embodiment, the polyol is a macropolyol of formula Ia,

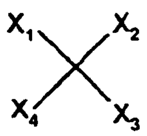

**Ia**

wherein each of $X_1$, $X_2$ and $X_3$ is independently an OH-terminated polyoxyalkylene group; and

$X_4$ is H or as defined for $X_1$, $X_2$ and $X_3$.

In one preferred embodiment, the polyol is of formula Ia, each of $X_1$, $X_2$ and $X_3$ is independently an OH-terminated polyoxyalkylene group and $X_4$ is H.

In another preferred embodiment, the polyol is of formula Ia, each of $X1_t$, $X_2$, $X_3$ and $X_4$ is independently an OH-terminated polyoxyalkylene group.

In one highly preferred embodiment, Z is derived from 1,2,3,4,5-pentanepentol,

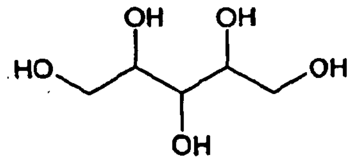

**1,2,3,4,5-Pentanepentol**

wherein 3, 4 or 5 of the OH groups are each independently substituted by a polyoxyalkylene group.

In one highly preferred embodiment, the polyol is of formula II,

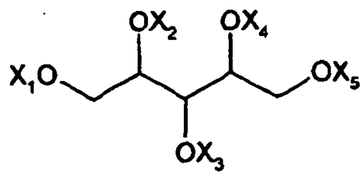

**II**

wherein $X_1$, $X_2$ ,$X_3$ $X_4$, and $X_5$ are each independently a polyoxyalkylene group.

In one highly preferred embodiment, Z is derived from pentaerythritol,

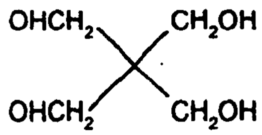

**Pentaerythritol**

i.e. the polyol is derived from pentaerythritol wherein 3 or 4 of the OH groups are independently substituted by a polyoxyalkylene group.

In another preferred embodiment, the polyol is of formula Ib,

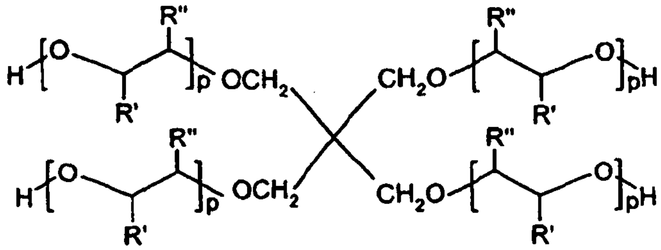

**Ib**

wherein each p is from about 3 to about 25 and R' and R" are each independently H or alkyl. More preferably, p is about 25.

In another particularly preferred embodiment, the macropolyol is of formula Ic,

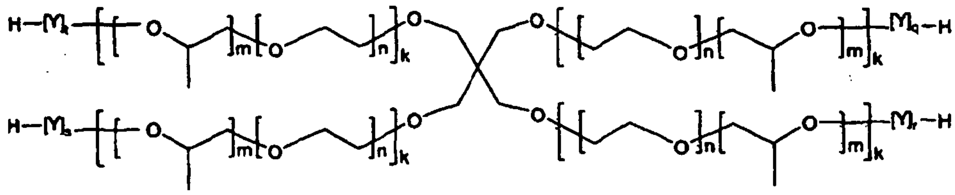

**Ic**

wherein Y is the group $-CH_2-CH(R')-O-$; R' is H or $CH_3$, n is an integer from 0 to 20, m is an integer from 0 to 6, k is an integer from 3 to 25 and each of q, r, s and t is independently an integer from 1 to 25. More preferably, n is 4, m is 0 and k is 5 and R' is $CH_3$, q, r, s and t are 1. The terminal groups in these polyols maybe either primary or secondary hydroxyl groups.

Preferably, the polyol is a fluid at ambient temperatures.

Preferably, the macropolyol has a molecular weight of from about 500 to about 20,000, more preferably from about 500 to about 15,000.

In one highly preferred embodiment, the macropolyol is an ethylene oxide/propylene oxide copolymerisate, typically having a tetrahydroxy functionality. According to one embodiment, the macropolyol has the structure:

$H(OCH_2CH_2)_n(OCH_2CHCH_3)_mOH$ where n:m is around 4:1.

Such ethylene oxide/propylene oxide copolymerisates are available from Clariant under reference P41, in particular P41/200, P41/300, P41/3000 and P41/12000 may be used.

In one highly preferred embodiment, the macropolyol is P41/300. Various grades of P41/300 are commercially available and can be used to afford the material of the present invention.

P41/300 has a molecular weight of ~5000, P41/3000 has a molecular weight of ~15,000, whereas P41/12000 has a molecular weight of ~20,000.

Advantageously, the use of macropolyols of the invention (particularly P41/300, P41/3000 or P41/12000 and

related compounds) gives rise to a liquid reaction mixture in which all the reaction components and additives are maintained in the fluid state for subsequent dispensing into molds at the ambient temperature, thereby allowing the reaction and curing to take place. The curing step may take place with or without additional heating.

Preferably, the polyol is used in an amount from about 10 to about 95 wt % of the reactants, more preferably from about 30 to about 70 wt % of the reactants.

The macropolyol used in the compositions of the invention is preferably a tetrafunctional hydroxyl terminated macromolecule (e.g. of formula Ia, Ib or Ic). Preferably, the terminal OH groups are secondary hydroxyls (e.g. derived from propylene oxide unit, such as compounds of formula 1c wherein m is greater than zero) that react with isocyanate groups (e.g. Desmodur W). The reactivity ratio of the secondary hydroxyl groups is generally lower than primary hydroxyls (e.g. in TEG).

Generally where the reaction mixture comprises at least one polyol or macropolyol, a poly- or di-isocyanate may be used. Advantageously a di-isocyanate is used.

According to one embodiment, the polyol may comprise silicon, in particular Z may comprise silicon. Typically the polyol is a polydialkyl siloxane diol, generally comprising at least one terminal carbinol group, suitably all of the hydroxyl functional groups are in the form of terminal carbinol groups.

According to one embodiment, the polyol may have the structure of Formula VII:

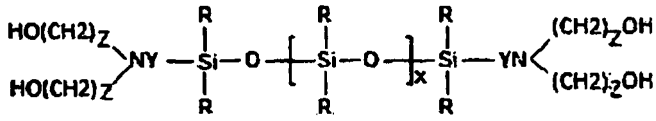

where R represents a small alkyl group, typically methyl, x is an integer from 1 to 324, Y is an alkyl group (generally having a carbon backbone of 1 to 25 carbon atoms, typically 1 to 6 carbon atoms), Z is an integer from 1 to 25 (generally 1 to 5, typically 2).

**Di-isocyanate**

The polymer composition of the invention is prepared using at least one di-isocyanate. Preferably, the di-isocyanate is an organic di-isocyanate.

The di-isocyanate performs a number of different functions. Firstly, it acts as a coupling agent for the polyethylene glycol or polyol component to produce the soft segment. Secondly, it acts as a coupling agent to produce urethane-rich hard segments. Thirdly, it acts as a coupling agent for the soft and hard segments to build up the molecular weight of the resulting polymer.

The diisocyanate is preferably an aliphatic diisocyanate. Aliphatic diisocynates which are fluid at ambient temperatures are particularly preferred,

Preferably, the di-isocyanate is of the formula OCN-$R_1$-NCO, wherein $R_1$ is a linear or branched $C_3$-$C_{18}$-alkylene, an unsubstituted or $C_1$-$C_4$-alkyl-substituted or $C_1$-$C_4$-alkoxy-substituted $C_6$-$C_{10}$-arylene, a $C_7$-$C_{18}$-aralkylene, a $C_6$-$C_{10}$-arylene-$C_1$-$C_2$-alkylene-$C_6$-$C_{10}$-arylene, a $C_3$-$C_8$-cycloalkylene, a $C_3$-$C_8$-cycloalkylene-$C_1$-$C_6$-alkylene, a $C_3$-$C_8$-cycloalkylene-$C_1$-$C_6$-alkylcne-$C_3$-$C_8$-cycloalkylene or a $C_1$-$C_6$-alkylene-$C_3$-$C_8$-cycloalkylene-$C_1$-$C_6$-alkylene.

Examples of particularly preferred diisocyanates include methylene dicyclohexyl diisocyanate, hexamethylene diisocyanate, isophorone diisocyanate, toluene-2,4-diisocyanate, toluene-2,6-diisocyanate, mixtures of toluene-2,4 and 2,6-diisocyanates, ethylene diisocyanate, ethylidene diisocyanate, propylene-1,2-diisocyanate, cyclohexylene-1,2-diisocyanate, cyclohexylene-1,4-diisocyanate, m-phenylene diisocyanate, 4,4"-biphenylene diisocyanate, 3,3 "-dichloro4,4"-biphenylene diisocyanate, 1,6-hexamethylene diisocyanate, 1,4-tetramethylene diisocyanate, 1,10-decamethylene diisocyanate, cumene-2,4-diisocyanate, 1,5-napthalene diisocyanate, 1,4-cyclohexylene diisocyanate, 2,5-fluorenediisocyanate, polymeric 4,4'-diphenylmethane diisocyanate.

The diisocyanate is preferably an aliphatic diisocyanate. Aliphatic diisocynates which are fluid at ambient temperatures are particularly preferred.

In one highly preferred embodiment, the di-isocyanate is Desmodur W (methylene bis (4-cyclohexyl isocyanate), MW = 262.5).

Preferably, the di-isocyanate is used in an amount of from about 0.05 to about 55. Where a polyethylene glycol is used, the di-isocyanate is preferably used in an amount from about 10 to about 40, more preferably, from about 20 to about 40 wt % of the reactants. Where a polyol according to Formula I is used, the di-isocyanate is preferably used in an amount from about 9 wt% to about 50 wt%, more preferably from about 20 wt% to about 35 wt%.

The amount of di-isocyanate in any given composition can be adjusted to modify the properties/attributes of the resultant polyurethane composition.

**Poly-isocyanate**

The polymer composition of the invention may be prepared using at least one poly-isocyanate. Preferably, the poly-isocyanate is an organic poly-isocyanate.

The poly-isocyanate performs a number of different functions. Firstly, it acts as a coupling agent for the macropolyol component to produce the soft segment. Secondly, it acts as a coupling agent to produce urethane-rich hard segments. Thirdly, it acts as a coupling agent for the soft and hard segments to build up the molecular weight of the resulting polymer.

Suitable poly-isocyanates for use in the compositions of the present invention include, trifunctional trimer (isocyanurate) of isophorone diisocyanate, trifunctional trimer (isocyanurate) of hexamethylene diisocyanate and polymeric 4,4'-diphenylmethane diisocyanate.

More preferably, the poly-isocyanate is aliphatic. Preferably, the poly-isocyanate is liquid at ambient temperature.

Preferably, the poly-isocyanate is used in an amount of from about 9 wt% to about 50 wt%, more preferably from about 20 wt% to about 35 wt%. The amount of poly-isocyanate in any given composition can be adjusted to modify the properties/attributes of the resultant polyurethane composition.

The stoichiometery (OH/NCO ratio) of the reacting mixture plays an important part in determining the extent of cross-linking. For example, the cross-link density, and hence the molecular weight/modulus of the material, is expected to be relatively higher for a 1:1 NCO:OH stoichiometry, and such a material is also expected to afford relatively lower water content on hydration than the polymer afforded by a composition that has a non stoichiometric ratio (e.g. OH groups > NCO groups). The skilled person would thus appreciate that the NCO:OH stoichiometry can be adjusted so as to obtain a material with the desired modulus and to some degree water content.

In one particularly preferred embodiment, the reactants are employed in such proportions as to provide an overall OH/NCO ratio in the range of from OH/NCO 2.0:2.8 -2.0:1.1, more preferably, 2.0:1.7. Such OH/NCO ratios are particularly preferred where the polymer composition is prepared using a polyol of formula I. In particular such OH/NCO ratios are preferred where the polyurethane composition is prepared using RCM techniques.

According to a further preferred embodiment, the reactants are employed in such proportions as to provide an overall NCO/OH ratio of less than 1.2, preferably from 0.8 to about 1.1, more preferably from about 0.85 to about 0.99, more preferably from about 0.95 to about 0.98. Such OH/NCO ratios are particularly preferred where the polymer composition is prepared using a polyethylene glycol compound. In particular such OH/NCO ratios are preferred where the polyurethane composition is prepared using IM techniques.

**OH-terminated Chain Extender**

The polyurethane composition of the present invention may comprise one or more chain extenders.

Preferably, the chain extender is a di-functional chain extender comprising two hydroxyl groups which may be either primary or secondary hydroxyls.

Preferably, the number average molecular weight of the difunctional chain extender is less than or equal to 1000.

In one preferred embodiment, the chain extender is selected from polyethylene glycols and/or polypropylene glycols or glycols comprising copolymers of ethylene oxide and propylene oxide.

The chain extender may be a diol, in particular of formula II:

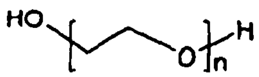

wherein n is an integer from 1 to 25, preferably 1 to 10, more preferably 1 to 4.

According to a further preferred embodiment, the n is an integer from 2 to 25, preferably 2 to 10.

Preferably, where the reactant mixture comprises at least one polyethylene glycol, one or more diols of formula II are added.

Preferred chain extenders for use in the present invention include triethylene glycol, 1,4-butanediol, tetraethylene glycol, diethylene glycol, triethylene glycol (TEG) ethylene glycol, hexanediol, propylene glycol, 2-ethylhexanediol-1,6, neopentyl glycol hydroquinone bis(2-hydroxyethyl) ether, dipropylene glycol, 2-methyl-2-ethyl-1,3-propanediol, 2-ethyl-1,3-hexanediol, 1,5-pentanediol, thiodiglycol, 1,3-propanediol, 1,3-butanediol, 2,3-butanediol, 1,2-dimethyl-1,2-cyclopentanediol, 1,2-cyclohexanediol, 1,2-dimethyl-1,2-cyclohexanediol, 1,2,4-butanetriol, aromatic-aliphatic glycols such as bis-1,4(β-hydroxyethoxy)benzene, and polymers of ethylene oxide and copolymers of ethylene oxide with propylene oxide having a number average of less than or equal to 1000 may also be employed.

In one highly preferred embodiment, the chain extender is diethylene glycol (DEG), i.e. n is 2.

In one highly preferred embodiment, the chain extender is triethylene glycol (TEG), i,e, n is 3. Advantageously, compositions derived from TEG produce thermoformable polymers that show high light transmissibility in the fully water swollen state.

In one highly preferred embodiment, the chain extender is tetraethylene glycol (TTEG), i.e. n is 4.

Preferably, the chain extender is used an amount of from 2 to about 45 wt % of the reactants, typically 5 to about 45 wt % of the reactants, more preferably from about 10 to about 25 wt % of the reactants.

Where the chain extender is EG, preferably it is used in an amount of from about 2 to about 10 wt % of the reactants, more preferably from about 2 to about 6 wt % of the reactants.

Where the chain extender is DEG, preferably it is used in an amount of from about 5 to about 20 wt % of the reactants, more preferably, from about 10 to about 16 wt % of the reactants.

Where the chain extender is TEG, preferably it is used in an amount of from about 8 to about 45 wt % of the reactants, more preferably from about 14 to about 30 wt % of the reactants, even more preferably from about 10 to about 25 wt % of the reactants, typically from about 15 to about 25 wt % of the reactants.

Where the chain extender is TTEG, preferably it is used in an amount of from about 20 to about 30 wt % of the reactants.

The proportion of the chain extender within a given composition can also affect the material properties. The chain extender reacts with NCO groups of the di- or poly-isocyanate (e.g.Desmodur W) to form the "hard" blocks within the resultant polymer matrix that affords the strength (tensile properties) to the material. The skilled person would thus appreciate that the proportion of the given chain extender can be adjusted in order to fine tune the tensile properties of the resulting material.

Preferably, the chain extender is of formula II where the reactant mixture comprises one or more PEG compounds. Generally the chain extender of formula II is used in an amount of about 2 to about 60 mole equivalents to the amount of PEG, preferably, from about 5 to about 30 mole equivalents, even more preferably, from about 15 to about 22 mole equivalents relative to the PEG in a given composition.

**Polydialkyl Siloxane Diol**

According to one preferred embodiment, the composition of the present invention is prepared from at least one polydialkyl siloxane diol. Generally the polydialkyl siloxane diol comprises one or two terminal carbinol groups, typically two terminal carbinol groups.

The reaction of the invention involves reacting the OH groups of the polydialkyl siloxane diol and polyol component with isocyanate groups to form a polyurethane. Polydialkyl siloxanes are substantially hydrophobic, whereas the polyol component is substantially hydrophilic. In order to overcome any potential compatibility problems, the polydialkyl siloxane hydride terminated is first reacted with an allylpolyglycol in a hydrosilylation reaction to form a polydialkyl siloxane diol (also referred to hereinafter as the "silicone macromer") as follows:

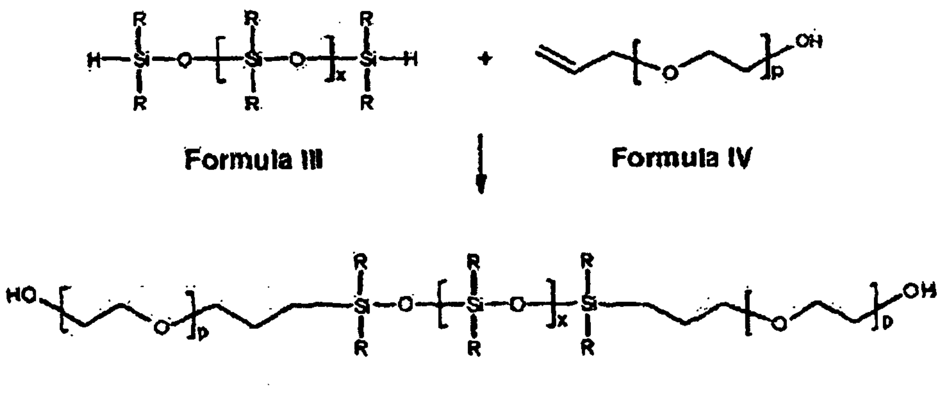

**Formula V**

**Polydialkyl siloxane diol ("silicone macromer")**

where R is alkyl, p is an integer from 1 to 110 and x is an integer from 1 to 324.

Other allyl glycols may also be used in the above reaction instead of the compound of formula IV. For example, alternative reactants include the following:

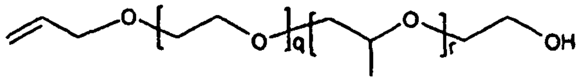

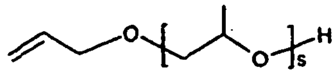

where q is an integer from 1 to 40, r is an integer from 1 to 10 and s is an integer from 1 to 25.

Preferably, the hydrosilylation is carried out in the presence of a catalyst. More preferably, the catalyst is a palladium catalyst. Even more preferably still, the palladium catalyst is platinum(0)-1,3-divinyl-1,1,3,3-tetramethyldisiloxane complex solution in xylene, Pt ~2%.

The hydrosilylation reaction changes the hydrophobic nature of the polydialkyl siloxane to a relatively hydrophilic reactive monomer with OH functional groups. This improves the compatibility with the other co-reactants in the reaction mixture.

In one particularly preferred embodiment, the polydialkyl siloxane is prepared by reacting polydimethyl siloxane hydride terminated (PDMS) with an allyl polyglycol such as polyethylene glycol monoallyl.

According to one embodiment, the polydialkyl siloxane diol comprises one or two terminal carbinol groups.

In particular, the polydialkyl siloxane diol may comprise a hydrocarbyl group between the siloxane group and the or each carbinol group. The hydrocarbyl group may be substituted or unsubstituted, typically with one or more small alkyl groups. Alternatively or additionally, the hydrocarbyl group may comprise one or more ether, or ester groups. Typically the hydrocarbyl group is unsubstituted. Alternatively, the hydrocarbyl group comprises an ether group. According to a further embodiment, the hydrocarbyl group comprises an ester group.

The hydrocarbyl group typically has a carbon backbone of 5 to 150 carbon atoms. According to one embodiment, the hydrocarbyl group is unsubstituted and has a carbon backbone of 1 to 10 carbon atoms, generally 1 to 5 carbon atoms, typically 3 to 5 carbon atoms.

Alternatively, the hydrocarbyl group comprises an ether group and has a carbon backbone of 5 to 50 carbon atoms, typically 5 to 40 carbon atoms.

According to a further embodiment, the hydrocarbyl group comprises an ester group and has a carbon backbone of 90 to 150 carbon atoms, typically 100 to 150 carbon atoms.

Generally the polydialkyl siloxane diol has a molecular weight of 500 to 10000, typically 1000 to 7000.

Typically the alkyl groups of the polydialkyl siloxane diol are small alkyl groups. According to one embodiment, the polydialkyl siloxane diol is a polydimethyl siloxane diol.

The term "Silicone Macromer" or "Carbinol terminated polydialkyl siloxane" is generally used to refer to a dihydroxy terminated block copolymer oxyethylene - dimethylsiloxane - oxyethylene (eg.,formula V described in this document) or oxypropylene - dimethylsiloxane - oxypropylene oxide or caprolactone - dimethylsiloxane caprolactone of different molecular weights containing different weight % of non-siloxane units. Some such compounds are also available commercially e.g., Gelest Inc. supplies compounds like DMS-C15 having a molecular weight of around 1000, and a non-siloxane content of around 20 wt %, DBE-C25 having a molecular weight of around 3500-4500, and a non-siloxane content of around 60 wt%}, DBP-C22 having a molecular weight of around 2500-3200, and a non-siloxane content of around 45-55 wt %, DBL-31 having a molecular weight of around 5700-6900, and a non-siloxane content of around 50 wt%.

The polydialkyl siloxane diol typically has the structure of Formula V

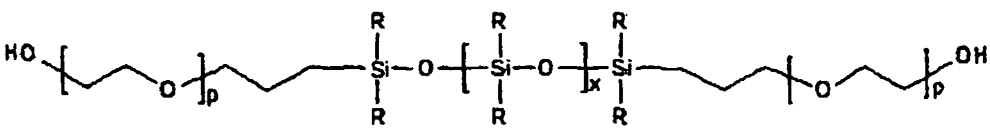

Alternatively the polydialkyl siloxane diol has the structure of Formula VI:

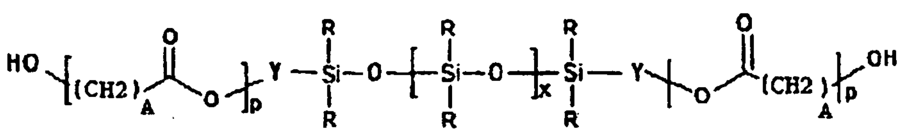

where R represents a small alkyl group, typically methyl, Y represents an alkyl group (generally having a carbon backbone of 1 to 25 carbon atoms, typically 1 to 6 carbon atoms), p is an integer from 1 to 110, x is an integer from 1 to 324 and

A in an integer from 1 to 25, typically 1 to 10, generally 3 to 7, suitably 5.

According to one embodiment the polydialkyl siloxane diol has the structure of Formula V and has an associated molecular weight of 600 to 10000.

According to further embodiment, the polydialkyl siloxane diol has the structure of Formula VI and has a molecular weight of 5500 to 7000.

According to one embodiment, the polydialkyl siloxane diol is an oxyethylene - dimethylsiloxane - oxyethylene block polymer. Alternatively the polydialkyl siloxane diol is a oxypropylene - dimethylsiloxane - oxypropylene block copolymer. According to a further embodiment the polydialkyl siloxane diol is a caprolactone - dimethylsiloxane - caprolactone block copolymer.

The polydialkyl siloxane diol may comprise a mixture of more than one of the compounds described above. In particular, the polydialkyl siloxane diol may include more than one compound of Formula V and/or Formula VI having different molecular weights.

In one preferred embodiment, the polydialkyl siloxane diol is hydroxyethoxy-propyl terminated PDMS.

In one highly preferred embodiment, the polydialkyl siloxane diol is a polydimethyl siloxane diol, i.e. R is methyl in formula III.

Preferably, the starting polydialkyl siloxane dihydride terminated has a molecular weight of from about 200 to about 12,000, even more preferably, from about 500 to about 2000.

Preferably, the allylpolyglycol has a molecular weight of from about 200 to about 2000, even more preferably, from about 500 to about 1200.

In one particularly preferred embodiment, the silicone macromer is 2780 which is manufactured from allyl polyglycol 1100 and PDMS hydride terminated (MW=580).

In another particularly preferred embodiment, the silicone macromer is 1580 which is manufactured from allyl polyglycol 500 and PDMS hydride terminated (MW=580).

Similarly Carbinol (hydroxyl) terminated polydimethyl siloxanes such as copolymers of general architecture (oxyethylene)-(dimethylsiloxane)-(oxyethylene), (oxypropylene)-(dimethylsiloxane)-(oxypropylene) and (carpolactone)-(dimethylsiloxane)-(carpolactone) of different molecular weights and containing different non-siloxane content can be used. Any of these for simplicity may be referred to herein as the silicone macromer.

Catalysts may be used to speed up the polyurethane formulation and any of those catalysts normally used by those skilled in the art may be employed. For example, suitable catalysts normally dibutyltin dilaurate, stannous octoate, tertiary amines such as triethylamine and the like. In one highly preferred embodiment, the catalyst is dibutyl tin dilaurate (DBTDL).

Preferably, the catalyst is used in an amount of from about 0.02 wt % to about 1.0 wt % of the reactants, more preferably, from about 0.05 wt % to about 0.5 wt %, even more preferably, from about 0.05 wt % to about 0.2 wt %, of the reactants.

The second step of the reaction involves reacting the OH groups of the polydialkyl siloxane diol, PEG and diol components with isocyanate groups to form a polyurethane. The reaction of the invention proceeds with the di-isocyanate reacting randomly with the PEG, diol and silicone macromer to form a polymer matrix. Advantageously, the resulting polymer matrix allows high flux of oxygen, resulting in a high DK lens.

## Additional Components

In one preferred embodiment, the composition further comprises one or more antioxidants. Suitable antioxidants include BHA (butylated hydroxyl anisole), BHT (butylated hydroxytoluene) and ascorbic acid. Preferably, the antioxidant is BHA.

Preferably, the antioxidant is used in an amount of about 0.01 to about 10 wt % of the reactants, more preferably from about 0.1 to about 5 wt %, even more preferably from about 0.2 to about 1 wt % of the reactants in any given composition. According to one embodiment, the antioxidant is present at 1 to 3 wt%.

In one preferred embodiment, the composition of the invention further comprises one or more tinting agents. By way of example, suitable tinting agents commonly used in the contact lens industry include the following: benzene sulfonic acid, 4-(4,5-dihydro-4-((2-methoxy-5-methyl-4-((2-(sulfooxy)ethyl)sulfonyl)phenyl)azo-3-methyl-5-oxo-1H-pyrazol-1-yl); [2-naphthalene-sulfonic acid, 7-(acetylamino)-4-hydroxyl-3-((4-((sulfo-oxyethyl)sulfonyl)phenyl)azo)-]; [5-((4,6-dichloro-1,3,5-triazin-2-yl)amino-4-hydroxy-3-((1-sulfo-2-naphthalenyl)azo-2,7-naphthalene-disulfonic acid, trisodium salt]; [copper, 29H, 31H-phthalocyaninato(2-)-$N_{29}$,$N_{30}$,$N_{31}$,$N_{32}$)-,sulfo((4((2-sulfooxy)ethyl)sulfonyl)-phenyl)amino) sulfonyl derivative]; and [2,7-naphthalenesulfonic acid, 4-amino-5-hydroxy-3,6-bis((4-((2-(sulfooxy)ethyl)sulfonyl) phenyl)azo)-tetrasodium salt].

Particularly preferred tinting agents for use in the present invention are phthalocyanine pigments such as phthalocyanine blue and phthalocyanine green, chromic-alumina-cobaltous oxide, chromium oxides, and various iron oxides for red, yellow, brown and black colours, chromophtal violet and chromophtal oxide green. The use of organic

pigments, particularly phthalocyanine pigments, more particularly copper phthalocyanine pigments, and even more particularly copper phthalocyanine blue pigment (e.g., Colour Index Pigment Blue 15, Constitution No. 74160) is preferred. Opaquing agents such as titanium dioxide may also be incorporated. For certain applications, a mixture of colours may be employed for better simulation of natural iris appearance.

In one preferred embodiment, the tinting agent is a handling tint such as Reactive Blue 4.

Preferably, the weight percentage of the tinting agent is from about 0.0001 % to about 0.08 %, more preferably, 0.0001 % to about 0.05 %. In one preferred embodiment, the tinting agent is present in an amount of from about 0.005 to 0.08 wt %. In one preferred embodiment, the weight percentage of the tint is from about 0.0001 % to about 0.04 %, more preferably, from about 0.0001 % to about 0.03 wt % of the reactants.

In one preferred embodiment, the composition of the invention further comprises one or more UV blockers or UV absorbers. A UV absorber may be, for example, a strong UV absorber that exhibits relatively high absorption values in the UV-A range of about 320-380 nanometers, but is relatively transparent above about 380 nm. Preferably, the UV Blocker is a commercially available UV Blocker such as AEHB (acryloxyethoxy hydroxybenzophenone; $C_{18}H_{16}O_5$).

Generally speaking, a UV absorber, if present, is provided in an amount from about 0.5 wt % to about 1.5 wt % of the reactants. Particularly preferred are compositions which include from about 0.6 wt % to about 1.0 wt % UV absorber, more preferably, about 1.0 wt % of the reactants.

Catalysts may be used to speed up the polyurethane formulation and any of those catalysts normally used by those skilled in the art may be employed. For example, suitable catalysts include dibutyltin dilaurate, stannous octoate, tertiary amines such as triethylamine and the like. In one highly preferred embodiment, the catalyst is dibutyl tin dilaurate (DBTDL).

Preferably, the catalyst is used in an amount of from about 0.02 wt % to about 1.0 wt % of the reactants, more preferably, from about 0.05 wt % to about 0.5 wt %, even more preferably, from about 0.05 wt % to about 0.2 wt %, of the reactants.

## Process

The second aspect of the invention relates to a process for preparing a polyurethane hydrogel, said process comprising:

i) preparing a mixture of

either ai) at least one polyethylene glycol and
aii) at least one diisocynacite; or
bi) at least one polyol of formula I

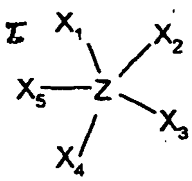

I

wherein at least three of $X_1$, $X_2$, $X_3$, $X_4$ and $X_5$ are each independently an OH-terminated group, and the remainder of $X_1$, $X_2$, $X_3$, $X_4$ and $X_5$ are each independently H or absent, and Z is a central linking unit, and
bii) at least one di- or poly-isocyanate,
c) optionally at least one OH-terminated chain extender, and
d) at least one polyethyleneglycol dialkyl ether of formula A;

ii) allowing the mixture formed in step i) to react appropriately to form a cross-linked polyurethane xerogel;
iii) hydrating the xerogel using an aqueous medium to form a hydrogel.

Advantageously, the process of the invention involves curing the reactants in step (i) directly to form a polyurethane xerogel without the need for the addition of water as a reactant. The process of the present invention generally proceeds under substantially anhydrous conditions. This results in a polyurethane backbone that is substantially free from urea groups, in contrast to methods known in the art. The absence of water (as far as practicable) prevents any significant formation of urea groups which can cause an increase of the swollen water modulus to a degree that is

undesirable for contact lenses.

In one preferred embodiment of the invention the reactants in step (i) are mixed and dehydrated under vacuum. Preferably, the reactants are dehydrated under vacuum at a temperature of about 95°C for at least 90 minutes.

In one preferred embodiment, the di- or poly-isocyanate is added to a mixture of the polyol and the difunctional OH-terminated chain extender.

Preferably, the reactants in step (i) are degassed under vacuum using a rotary evaporator.

Processing step (iii) typically involves injection or compression molding the material into the shape of a lens. Other suitable processing techniques include cast molding, spin cast molding and lathing.

The invention also relates to the use of a polymer according to the invention in the preparation of a contact lens.

The third aspect of the present invention relates to a process for preparing a polyurethane xerogel in the form of a molded article, preferably in the form of a contact lens comprising the steps of:

i) preparing a mixture of

either ai) at least one polyethylene glycol or at least one polyol of formula I, and
aii) at least one diisocyanate; or
bi) at least one polyol of formula I,

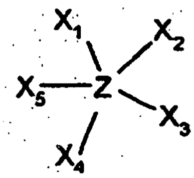

I

wherein at least three of $X_1$, $X_2$, $X_3$, $X_4$, and $X_5$ are each independently an OH-terminated group, and the remainder of $X_1$, $X_2$, $X_3$, $X_4$ and $X_5$ are each independently H or absent, and Z is a central linking unit, and
bii) at least one di- or poly-isocyanate,
c) optionally at least one OH-terminated chain extender, and
d) at least one polyethyleneglycol dialkyl ether of formula A,

ii) dispensing the reaction mixture formed in step i) into a contact lens mold;
iii) allowing the reaction mixture to react and cure;
iv) removing the contact lens from the mold; and
v) hydrating the contact lens.

In one preferred embodiment, the reactants in step (i) are dispensed into a female lens mold and the male part of the lens mold is then placed over the liquid contained in the female part and subsequently closed by a machine.

In one preferred embodiment, the reaction takes place at a temperature of from about 70 °C to about 120 °C, more preferably, from about 80 °C to about 110 °C. In one highly preferred embodiment, the reaction takes place at a temperature of from about 90 °C to about 100 °C.

Preferably, the mixture is reacted for about 0.5 to about 24 hours, more preferably, for about 3 to about 8 hours. Even more preferably, the mixture is reacted for at least about 5 hours, more preferably, at 8 hours. The disappearance of the NCO absorption band at 2260 $cm^{-1}$ in the FTIR spectrum of the resulting product signifies that the reaction is complete.

Preferably, the molds are allowed to cure for about 0.5 to about 24 hours, more preferably, for about 3 to about 8 hours. Even more preferably, the molds are allowed to cure for at least about 5 hours. Optionally the curing can also be done in the oven under a dry nitrogen flow.

Preferably, the molds are removed from the oven and allowed to cool to ambient temperature.

The lens molds may then be physically separated (at ambient temperature) and the part containing the lens is immersed in excess of saline for 5-150 minutes, more preferably for 60-90 minutes, more preferably still for 30-60 minutes, to demold the lens.

Yet another aspect relates to the use of a polyurethane xerogel or polyurethane hydrogel according to the invention in the preparation of a contact lens.

**Process for preparing a molded article**

The third aspect of the invention relates to a process for preparing a polyurethane xerogel in the form of a molded article, said process comprising the steps of:

i) preparing a mixture of

either ai) at least one polyethylene glycol or at least one polyol of formula 1,
aii) at least one diisocyanate, or
bi) at least one polyol of formula I

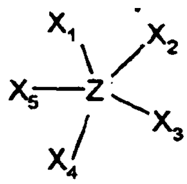

I

wherein at least three of $X_1$, $X_2$, $X_3$, $X_4$ and $X_5$ are each independently an OH-terminated group, and the remainder of $X_1$, $X_2$, $X_3$, $X_4$ and $X_5$ are each independently H or absent, and Z is a central linking unit, and
bii) at least one di- or poly-isocyanate,
c) optionally at least one OH-terminated chain extender, and
d) at least one polyethyleneglycol dialkyl ether of formula A,

ii) dispensing the reaction mixture formed in step i) into a mold;
iii) allowing the reaction mixture to react and cure (generally with the assistance with energy, in particular thermal energy or other means of radiation);
iv) removing the molded article from the mold; and
v) hydrating the molded article.

Alternatively, the reaction mixture formed in step i) may be reacted to form a polyurethane xerogel prior to injection molding the polyurethane xerogel to form a molded article. In one preferred embodiment, the polyurethane xerogel is granulated or pelletized, and optionally dried under vacuum, prior to injection molding. The injection molding preferably takes place using conventional injection molding apparatus (such as a BOY 50M), that will be familiar to one of ordinary skill in the art.
In general the molded article is in the form of a contact lens.

**Article of manufacture**

Generally the article of manufacture has good structural integrity upon storage. Typically, the article of manufacture maintains its shape upon storage for up to at least 12 months, generally at least 24 months, advantageously 5 years or more.
Preferably, the article of manufacture is in the form of a contact lens.
A contact lens must be permeable to oxygen in order for the lens to facilitate normal corneal metabolism. Preferably, contact lenses prepared using the polymer composition of the invention exhibit a DK value of a least 10 Barrers more preferably, at least 20, even more preferably, at least 30 Barrers. More preferably still, the lenses have a DK of at least 40 Barrers.
In one preferred embodiment, the lenses have a DK of about 15 to about 40 Barrers more preferably, from about 25 to about 40 Barrers.
A contact lens must be able to transmit light in the visible region in order to function effectively in correcting visual defects. Preferably, contact lenses prepared using the polymer composition of the invention exhibit a light transmissibility of at least 80 %, more preferably at least 90 %, even more preferably, at least 95 % or 97 %. Preferably, the light transmissibility is from about 90 to about 100 %, more preferably from about 95 to about 100 %, more preferably still, 100 %.
Preferably, contact lenses prepared using the polymer composition of the invention exhibit a modulus of from about 0.1 to about 0.8 MPa, more preferably from about 0.25 to about 0.6 MPa.

The modulus of a contact lens pays a key role in controlling the mechanical properties of a soft contact lens. In addition, the on-eye performance is directly affected by the modulus. A value of greater than 1.25 MPa is likely to cause corneal staining whilst a modulus below 0.1 MPa is likely to lead to a lens with poor handling properties.

The present invention is further described with reference to the following non-limiting examples.

## EXAMPLES

The required quantities of the reactants and additives described in Table 1, namely, P41/300 or related macropolyols (Clariant GmbH), TEG (Sigma-Aldrich Ltd), Desmodur W (Bayer; supplied by Atlas Polymers Ltd UK), DBTDL (Sigma-Aldrich Ltd), where appropriate PEG DME (Sigma-Aldrich), BHA (Sigma-Aldrich), Reactive Blue 4 (Sigma-Aldrich) and UV Blocker (AEHB, CAS Number 16432-81-8; Contamac Ltd), were accurately weighed into a round bottom Quickfit flask using a 4-place balance and stoppered. The contents after mixing were dehydrated under vacuum at 95°C for at least 90 minutes using a Buchi rotary evaporator.

The flask was lifted out of the oil bath and allowed to cool down to ambient temperature. Once cooled, the required amount of the catalyst (DBTDL) was added through a needled syringe (by the difference of weight of the syringe containing DBTDL before and after the addition to the flask containing the dehydrated components). The flask was quickly stoppered and shaken. Finally the appropriate quantity of Desmodur W was added into the flask (by the weight difference of a syringe containing the required amount of the Desmodur W) in a fume hood. Optionally the order of mixing the catalyst and Desmodur W can also be reversed for convenience of better mixing and subsequent dispensing into the molds. The contents of the flask were mixed vigorously (ensuring the flask remains stoppered) and quickly degassed under vacuum for ~1 minute using a rotary evaporator (without using oil bath) to eliminate/reduce the bubbles. The mixture was then dispensed into female polypropylene lens molds (25-55 microlitre per lens as appropriate for a given mold variety). The male part of the lens mold was then placed carefully over the liquid contained in the female part and subsequently closed using a machine appropriately preset for the mold type used. This operation was repeated until all the lens molds were closed. These molds were then placed in a tray, put in an oven set at 95°C and allowed to cure for 5 hours. Optionally, the curing can be done under dry nitrogen. The molds were then removed from the oven, allowed to cool to ambient temperature and chilled in a freezer (set at -80°C) for at least 20 minutes. The lenses were demolded from the molds by separating the male and female parts and subsequently immersing in saline contained in glass vials.

Using an analytical balance the required amount of BHA and the dehydrated molten PEG as per indicated in the Table 2 for a given composition are accurately weighed into a 100 ml polypropylene cup and sealed with the screwable lid. The cup is placed in an oven at 95°C for few minutes until the BHA dissolves. Using a syringe and a fine needle, the required quantity of the catalyst (DBTDL) is added into the cup and stirred to mix the contents. The stirring can be achieved by the aid of a heated glass rod left in the cup. Finally the required amount of the Desmodur W is added to the cup through a syringe. The contents are mixed thoroughly and sealed with the lid. The cup is then placed in an oven at 95°C for 8 hours to complete the reaction. The disappearance of the NCO absorption band at 2260 $cm^{-1}$ in the FTIR spectrum of the resultant product confirmed complete reaction.

### Water content

Water content is calculated after measurement of dry weight and hydrated weight of a lens by using the following equation:

$$\text{Water Content (\%)} = (W_{\text{hydrated lens}} - W_{\text{dry lens}}) / W_{\text{hydrated lens}} \times 100$$

Five hydrated lenses, with excess surface water removed, are separately weighed on an analytical balance and average value is taken as $W_{\text{hydrated lens}}$. The lenses are then dried in an oven at 75°C for 2 hours and weighed again separately. The average value is taken as $W_{\text{dry lens}}$.

### % Transmittance

% Transmittance was determined under the guidance of ISO 8599 by using a double beam UV spectrophotometer (Jasco V530). A lens is placed into a cuvette containing standard saline solution. The cuvette is placed in the sample compartment. A matching cuvette containing saline is placed in the reference compartment of the UV spectrophotometer and a spectrum as percent transmittance was recorded between 200-780nm. The test was repeated a further four times and the mean value (% transmittance) at 550nm was recorded.

The contact lenses thus produced can be steam sterilised by a conventional method or may be sterilised by a UV sterilisation technique described below:

The contact lenses are separately placed in polypropylene lens mold (female part) containing saline. These are then sealed by a foil using a heat sealing unit and placed in an inverted position so that the polypropylene (which is UV transparent) part of the molds are facing the UV light source in the sterilisation unit XeMaticA-IL-SA (ex Steribeam, Germany). The product is then subjected to multiple short (250 micro second) pulses of high intensity ultraviolet rich light. This process renders the product sterilised.

**DK Measurement**

DK Measurement (i.e., oxygen permeability) was carried out by the polarographic technique as briefly described below:

Ten lenses were placed into the Gallenkamp incubator set at 35 +/-0.5 °C for 24 hours. The centre thickness (CT) of each of the ten lenses were measured by Rehder ET-3 Electronic Thickness Gauge and these lenses were stacked as follows: A single lens stack, two lens stack, three lens stack, and four lens stack. The CT of each stack was measured three times and a mean value for each was calculated and fed into a spread sheet specifically developed for the method. Also recorded was the atmospheric pressure into the spread sheet. The stack of lenses were replaced into the incubator set at 35 +/-0.5°C and humidity > 98%.

Each stack was separately placed on to the electrode (Rehder Permeometer with 8.7 mm electrode) ensuring that there are no bubbles entrapped between the lenses and the electrode. When the current reached its lowest point the reading was recorded in the relevant section of the spread sheet. This test was repeated for all the stacks.

The dark current reading (background) of the measurement system, when no oxygen is able to pass through to the electrode, was recorded and subtracted from all test material current values. Data was analysed taking into consideration the partial pressure of oxygen and the surface area of the polarographic sensor used and finally corrected for the edge effect. A graph of Dk/t corr verses thickness (cm) was then plotted and the inverse of the gradient of the best fit taken to represent the permeability (DK) of the lens material.

**Modulus Data**

Modulus data was measured for contact lenses prepared in accordance with the invention by tensile testing using the Instron 5842 Tensile testing system with Merlin Software.

Correlation to Standards/Regulation: ISO 9001:2008 (Quality Standards: Par 7.6; ISO 13485:2003 Medical Device Directive: Par 7.6; FDA Part 820 QS Regulation Subpart G: Control of inspection, monitoring and test equipment 820.72.

**Process (Material Preparation)**

Thickness readings for each lens were obtained using the ET-3 Thickness gauge. The lenses were placed flat on the cutting mat and two long pieces were cut from around the centre of the flat lens using a razor blade. These cut pieces were put into saline solution in a sample dish. The sample was loaded on to clamps using tweezers carefully going for the top clamp first and then the bottom. The gap in between the clamps was set at 10 mm using a calibrated vernier caliper. Once set, the "Reset GL" button was pressed to set the Gauge Length". Once the sample was loaded, the balance load was set to 0.000N and the test was started using the console controls.

Table 1 shows examples of the presently claimed PEG-RCM compositions where the reactive mixture was dispensed at room temperature into cold polypropylene molds cold liquid dispensed (CLD);

Table 2 shows an example of the presently claimed IM composition.

Examples 2-3 were provided for comparison only.

Examples 9-10 indicates the use of different levels of PEG DME 250 and Reactive Blue 4.

Example 11 indicates the use of a UV blocker.

Example 12 indicates various properties of the lens material afforded by this composition Comparison of examples 2, 3 and 9-11 show that by using PEG DME in the formulation, the modulus of the lens (material) can be reduced and hence the level of PEG DME can be adjusted to obtain the required value of modulus.

**Table 1: Selected compositions according to the invention**

| Example | Wt of P41/300 (g) | Wt of TEG (g) | Wt.of Desmodur W(g) | Wt. of DBTDL (g) | Wt of BHA (g) | Wt of PEG DME 250 (g) | Wt of AEHB( UV Blocke r) (g) | Reactive blue 4 (g) | Modulus (MPa) | DK (Barre r) | Water content (%) | Transmittance at 550nm (%) |
|---|---|---|---|---|---|---|---|---|---|---|---|---|
| 2 | 20.0350 | 3.0114 | 6.880 | 0.0177 | 0.2991 | 0 | 0 | | 1.29 | | | |
| 3 | 20.0009 | 3.0075 | 6.845 | 0.0344 | 0.3021 | | | | 1.34 | | | |
| 9 | 45.6007 | 6.8557 | 15.520 | 0.0331 | 0.3009 | 1.5707 | 0 | 0.0093 | 0.48+/- 0.13 | | | |
| 10 | 20.0070 | 3.0510 | 6.846 | 0.0128 | 0.2980 | 1.4906 | 0 | 0.0094 | 0.37 +/- 0.21 | | | |
| 11 | 19.9993 | 3.0129 | 6.832 | 0.0179 | 0.2982 | 1.4961 | 0.2983 | 0.0087 | 0.48 | | | |
| 12 | 20.0000 | 3.0034 | 7.455 | 0.0305 | 0.3050 | 1.9798 | 0 | 0.0089 | 0.82+/- 0.05 | 33 | 59.5 | 95.5 |
| | | | | | | | | | | | | |

**TABLE 2: Examples of PEG-injection molded compositions using Triethyleneglycol (TEG)**

| Compn | Wt of PEG 6088 (g) | Wt of PEG 3350 (g) | Wt of PEG 1000 (g) | Wt of TEG (g) | Weight of Desmodur w(g) | Weight of DBTDL (g) | wt of BHA (g) | Visual appearance when hydrated | EWC (%) | Modulus (MPa) | UV transmission @550nm (%) | DK (Barrers) |
|---|---|---|---|---|---|---|---|---|---|---|---|---|
| 24** | 999.74 | | | 542.70 | 974.8 | 1.2536 | 25.129 | transparent | 69.9 | 0.6+/-0.06 | | 34.25 |
| Wt% | 39.30 | | | 21.33 | 38.32 | 0.05 | 0.99 | | | | | |
| Moles | 0.1642 | | | 3.6139 | 3.7135 | | | | | | | |

** Composition 24 contains PEG-DME1000 (2 parts per hundred of the reactants) = 50.25g in the composition 24. This compound was added to the reactants prior to the polymerisation. i.e. prior to the addition of desmodur W.

## Claims

1. A polyurethane polymer composition, suitable for the formation of contact lenses, prepared by reacting a mixture comprising:
either

ai) at least one polyethylene glycol; and
aii) at least one di-isocyanate; or
bi) at least one polyol of formula I,

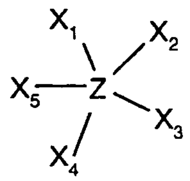

I

wherein at least three of $X_1$, $X_2$, $X_3$, $X_4$ and $X_5$ are each independently an OH-terminated group, and the remainder of $X_1$, $X_2$, $X_3$, $X_4$ and $X_5$ are each independently H or absent, and Z is a central linking unit, and
bii) at least one di or poly-isocyanate,
c) optionally at least one OH-terminated chain extender, and
d) at least one polyethyleneglycol dialkyl ether having the structure of Formula A:

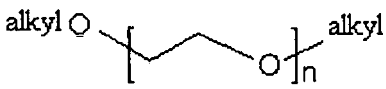

Formula A

2. A polymer as claimed in claim 1 wherein the polyethyleneglycol dialkyl ether compound is polyethyleneglycol dimethyl ether (PEG DME) or polyethyleneglycol dibutyl ether.

3. A polymer as claimed in either one of claims 1 and 2 wherein the polyethyleneglycol dialkyl ether is present in an amount of from 2.5 to 10 wt % of the reactants.

4. A polymer as claimed in any preceding claim wherein the polyethyleneglycol dialkyl ether has a molecular weight of 200 to 400.

5. A polymer as claimed in any preceding claim wherein the mixture comprises at least one polyethylene glycol having a molecular weight of 5000 to 8000, preferably 6000.

6. A polymer as claimed in any one of claims 1 to 4 wherein the mixture comprises at least one polyol of formula I wherein at least three of $X_1$, $X_2$, $X_3$, $X_4$ and $X_5$ are each independently an OH-terminated polyoxyalkylene group, wherein preferably the polyol is glycerol, trimethylpropane (TMP) or hexanetriol (HT).

7. A polymer as claimed in any preceding claim comprising at least one di-isocyanate selected from the group consisting of methylene dicyclohexyl diisocyanate, hexamethylene diisocyanate, isophorone diisocyanate, toluene-2,4-diisocyanate, toluene-2,6-diisocyanate, mixtures of toluene-2,4 and 2,6-diisocyanates, ethylene diisocyanate, ethylidene diisocyanate, propylene-1,2-diisocyanate, cyclohexylene-1,2-diisocyanate, cyclohexylene-1,4-diisocyanate, m-phenylene diisocyanate, 4,4"-biphenylene diisocyanate, 3,3"-dichloro4,4"-biphenylene diisocyanate, 1,6-hexamethylene diisocyanate, 1,4-tetramethylene diisocyanate, 1,10-decamethylene diisocyanate, cumene-2,4-diisocyanate, 1,5-naphthalene diisocyanate, 1,4-cyclohexylene diisocyanate, 2,5-fluorenediisocyanate and polymeric 4,4'-diphenylmethane diisocyanate; or comprising at least one poly-isocyanate selected from the group consisting of trifunctional trimer (isocyanurate) of isophorone diisocyanate and trifunctional trimer (isocyanurate) of hexamethylene diisocyanate and polymeric 4,4'-diphenylmethane diisocyanate.

8. A polymer as claimed in any preceding claim wherein the OH-terminated chain extender is a diol, having the structure of formula II:

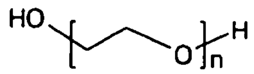

Formula II

wherein n is an integer from 2 to 25, and
wherein preferably the OH-terminated chain extender is selected from the group consisting of triethylene glycol, 1,4-butanediol, tetraethylene glycol, diethylene glycol, triethylene glycol (TEG), ethylene glycol, hexanediol, propylene glycol, 2-ethylhexanediol-1,6, neopentyl glycol hydroquinone bis(2-hydroxyethyl) ether, dipropylene glycol, 2-methyl-2-ethyl-1,3-propanediol, 2-ethyl-1,3-hexanediol, 1,5-pentanediol, thiodiglycol, 1,3-propanediol, 1,3-butanediol, 2,3-butanediol, 1,2-dimethyl-1,2-cyclopentanediol, 1,2-cyclohexanediol, 1,2-dimethyl-1,2-cyclohexanediol, 1,2,4-butanetriol, aromatic-aliphatic glycols such as bis-1,4(β-hydroxyethoxy)benzene, and polymers of ethylene oxide and copolymers of ethylene oxide with propylene oxide having a number average of less than or equal to 1000.

9. A polymer according to any preceding claim which further comprises one or more antioxidants, catalysts, tinting agents or UV blockers.

10. A polymer as claimed in claim 9 wherein the mixture comprises 1 to 3 wt% antioxidant.

11. A polyurethane hydrogel comprising the polymer of any preceding claim in hydrated form.

12. A process for preparing a polyurethane hydrogel, said process comprising:

i. preparing a mixture of:
either

ai) at least one polyethylene glycol; and
aii) at least one di-isocyanate; or
bi) at least one polyol of formula I,

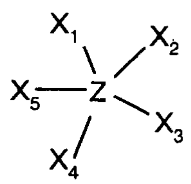

I

wherein at least three of $X_1$, $X_2$, $X_3$, $X_4$ and $X_5$ are each independently an OH-terminated group, and the remainder of $X_1$, $X_2$, $X_3$, $X_4$ and $X_5$ are each independently H or absent, and Z is a central linking unit, and
bii) at least one di- or poly-isocyanate,
c) optionally at least one OH-terminated chain extender, and
d) at least one polyethyleneglycol dialkyl ether having the structure of Formula A;

ii) allowing the mixture formed in step i. to react appropriately to form a cross-linked polyurethane xerogel; and
iii) hydrating the xerogel using an aqueous medium to form a hydrogel.

13. A process for preparing a polyurethane xerogel in the form of a molded article, preferably in the form of a contact lens, comprising the steps of:

i) preparing a mixture of
either

ai) at least one polyethylene glycol; and
aii) at least one di-isocyanate; or
bi) at least one polyol of formula I,

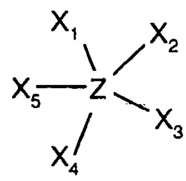

I

wherein at least three of $X_1$, $X_2$, $X_3$, $X_4$ and $X_5$ are each independently an OH-terminated group, and the remainder of $X_1$, $X_2$, $X_3$, $X_4$ and $X_5$ are each independently H or absent, and Z is a central linking unit, and
bii) at least one di- or poly-isocyanate,
c) optionally at least one OH-terminated chain extender, and
d) at least one polyethyleneglycol dialkyl ether having the structure of Formula A;

ii) dispensing the reaction mixture formed in step i) into a mold;
iii) allowing the reaction mixture to react and cure;
iv) removing the molded article from the mold; and
v) hydrating the molded article.

**14.** Use of a polymer according to any one of claims 1 to 10, or a polyurethane hydrogel according to claim 11 in the preparation of a contact lens.

**Patentansprüche**

**1.** Polyurethanpolymer-Zusammensetzung, die zur Bildung von Kontaktlinsen geeignet ist, wobei sie hergestellt wird, indem eine Mischung zur Reaktion gebracht wird, die Folgendes umfasst:
entweder

ai) mindestens ein Polyethylenglykol; und
aii) mindestens ein Diisocyanat; oder
bi) mindestens ein Polyol der Formel I,

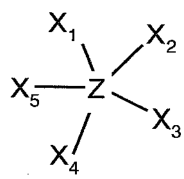

I

wobei mindestens drei von $X_1$, $X_2$, $X_3$, $X_4$ und $X_5$ jeweils unabhängig eine OH-terminierte Gruppe sind und der Rest von $X_1$, $X_2$, $X_3$, $X_4$ und $X_5$ jeweils unabhängig H ist oder abwesend ist, und Z eine zentrale Verknüpfungseinheit ist, und
bii) mindestens ein Di- oder Polyisocyanat,
c) optional mindestens ein OH-terminierter Kettenverlängerer, und
d) mindestens ein Polyethylenglykoldialkylether mit der Struktur der Formel A:

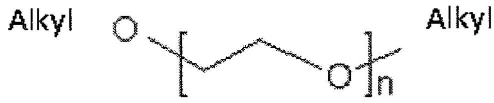

Formel A

2. Polymer nach Anspruch 1, wobei die Polyethylenglykoldialkyletherverbindung Polyethylenglykoldimethylether (PEG-DME) oder Polyethylenglykoldibutylether ist.

3. Polymer nach einem der Ansprüche 1 und 2, wobei der Polyethylenglykoldialkylether in einer Menge von 2,5 bis 10 Gew.-% der Reaktanten vorliegt.

4. Polymer nach einem der vorhergehenden Ansprüche, wobei der Polyethylenglykoldialkylether ein Molekulargewicht von 200 bis 400 aufweist.

5. Polymer nach einem der vorhergehenden Ansprüche, wobei die Mischung mindestens ein Polyethylenglykol umfasst, das ein Molekulargewicht von 5000 bis 8000, bevorzugt 6000, aufweist.

6. Polymer nach einem der Ansprüche 1 bis 4, wobei die Mischung mindestens ein Polyol der Formel I umfasst, wobei mindestens drei von $X_1$, $X_2$, $X_3$, $X_4$ und $X_5$ jeweils unabhängig eine OH-terminierte Polyoxyalkylengruppe sind, wobei das Polyol bevorzugt Glycerin, Trimethylpropan (TMP) oder Hexantriol (HT) ist.

7. Polymer nach einem der vorhergehenden Ansprüche, umfassend mindestens ein Diisocyanat, ausgewählt aus der Gruppe, bestehend aus Methylendicyclohexyldiisocyanat, Hexamethylendiisocyanat, Isophorondiisocyanat, Toluol-2,4-diisocyanat, Toluol-2,6-diisocyanat, Mischungen aus Toluol-2,4- und 2,6-diisocyanaten, Ethylendiisocyanat, Ethylidendiisocyanat, Propylen-1,2-diisocyanat, Cyclohexylen-1,2-diisocyanat, Cyclohexylen-1,4-diisocyanat, m-Phenylendiisocyanat, 4,4"-Biphenylendiisocyanat, 3,3"-Dichlor-4,4"-biphenylendiisocyanat, 1,6-Hexamethylendiisocyanat, 1,4-Tetramethylendiisocyanat, 1,10-Decamethylendiisocyanat, Cumol-2,4-diisocyanat, 1,5-Naphthalendiisocyanat, 1,4-Cyclohexylendiisocyanat, 2,5-Fluorendiisocyanat und polymerem 4,4'-Diphenylmethandiisocyanat; oder umfassend mindestens ein Polyisocyanat, ausgewählt aus der Gruppe, bestehend aus trifunktionellem Trimer (Isocyanurat) von Isophorondiisocyanat und trifunktionellem Trimer (Isocyanurat) von Hexamethylendiisocyanat und polymerem 4,4'-Diphenylmethandiisocyanat.

8. Polymer nach einem der vorhergehenden Ansprüche, wobei der OH-terminierte Kettenverlängerer ein Diol ist, das die Struktur der Formel II aufweist:

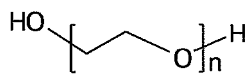

Formel II

wobei n eine ganze Zahl von 2 bis 25 ist, und
wobei der OH-terminierte Kettenverlängerer bevorzugt ausgewählt ist aus der Gruppe, bestehend aus Triethylenglykol, 1,4-Butandiol, Tetraethylenglykol, Diethylenglykol, Triethylenglykol (TEG), Ethylenglykol, Hexandiol, Propylenglykol, 2-Ethylhexandiol-1,6, Neopentylglykolhydrochinon-bis(2-hydroxyethyl)ether, Dipropylenglykol, 2-Methyl-2-ethyl-1,3-propandiol, 2-Ethyl-1,3-hexandiol, 1,5-Pentandiol, Thiodiglykol, 1,3-Propandiol, 1,3-Butandiol, 2,3-Butandiol, 1,2-Dimethyl-1,2-cyclopentandiol, 1,2-Cyclohexandiol, 1,2-Dimethyl-1,2-cyclohexandiol, 1,2,4-Butantriol, aromatisch-aliphatischen Glykolen wie etwa bis-1,4(β-Hydroxyethoxy)benzen und Polymeren von Ethylenoxid und Copolymeren von Ethylenoxid mit Propylenoxid mit einer Zahl im Durchschnitt von weniger als oder gleich 1000.

9. Polymer nach einem der vorhergehenden Ansprüche, ferner umfassend eines oder mehrere von Antioxidationsmitteln, Katalysatoren, Tönungsmitteln oder UV-Blockern.

10. Polymer nach Anspruch 9, wobei die Mischung 1 bis 3 Gew.-% Antioxidationsmittel umfasst.

11. Polyurethanhydrogel, umfassend das Polymer nach einem der vorhergehenden Ansprüche in hydrierter Form.

**12.** Verfahren zur Herstellung eines Polyurethanhydrogels, wobei das Verfahren Folgendes umfasst:

i. Herstellen einer Mischung aus:
entweder

ai) mindestens einem Polyethylenglykol; und
aii) mindestens einem Diisocyanat; oder
bi) mindestens einem Polyol der Formel I,

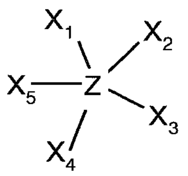

I

wobei mindestens drei von $X_1$, $X_2$, $X_3$, $X_4$ und $X_5$ jeweils unabhängig eine OH-terminierte Gruppe sind und der Rest von $X_1$, $X_2$, $X_3$, $X_4$ und $X_5$ jeweils unabhängig H ist oder abwesend ist, und Z eine zentrale Verknüpfungseinheit ist, und
bii) mindestens einem Di- oder Polyisocyanat,
c) optional mindestens einem OH-terminierter Kettenverlängerer, und
d) mindestens einem Polyethylenglykoldialkylether mit der Struktur der Formel A;

ii) Ermöglichen, dass die in Schritt i. gebildete Mischung angemessen eine Reaktion eingeht, um ein vernetztes Polyurethanxerogel zu bilden; und
iii) Hydratisieren des Xerogels unter Verwendung eines wässrigen Mediums, um ein Hydrogel zu bilden.

**13.** Verfahren zur Herstellung eines Polyurethanxerogels in Form eines Formteils, bevorzugt in Form einer Kontaktlinse, umfassend die folgenden Schritte:

i) Herstellen einer Mischung aus
entweder

ai) mindestens einem Polyethylenglykol; und
aii) mindestens einem Diisocyanat; oder
bi) mindestens einem Polyol der Formel I,

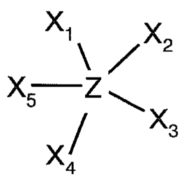

I

wobei mindestens drei von $X_1$, $X_2$, $X_3$, $X_4$ und $X_5$ jeweils unabhängig eine OH-terminierte Gruppe sind, und der Rest von $X_1$ $X_2$, $X_3$, $X_4$ und $X_5$ jeweils unabhängig H ist oder abwesend ist, und Z eine zentrale Verknüpfungseinheit ist, und
bii) mindestens einem Di-oder Polyisocyanat,
c) optional mindestens einem OH-terminierten Kettenverlängerer, und
d) mindestens einem Polyethylenglykoldialkylether mit der Struktur der Formel A;

ii) Abgeben der Reaktionsmischung, die in Schritt i) in eine Form gebildet wurde;
iii) Ermöglichen, dass die Reaktionsmischung eine Reaktion eingeht und aushärtet;
iv) Entfernen des Formteils aus der Form; und

v) Hydratisieren des Formteils.

**14.** Verwendung eines Polymers nach einem der Ansprüche 1 bis 10, oder eines Polyurethanhydrogels nach Anspruch 11 bei der Herstellung einer Kontaktlinse.

**Revendications**

**1.** Une composition polymère polyuréthane, adaptée pour la formation de lentilles de contact, préparée en faisant réagir un mélange comprenant :
soit

ai) au moins un polyéthylène glycol ; et
aii) au moins un diisocyanate ; soit
bi) au moins un polyol de formule I,

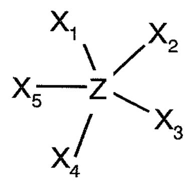

I

dans laquelle au moins trois éléments parmi $X_1$, $X_2$, $X_3$, $X_4$ et $X_5$ sont chacun indépendamment un groupe à terminaison OH, et les éléments restants de $X_1$, $X_2$, $X_3$, $X_4$ et $X_5$ sont chacun indépendamment H ou absents, et Z est une unité de liaison centrale, et
bii) au moins un diisocyanate ou polyisocyanate,
c) facultativement au moins un allongeur de chaîne à terminaison OH, et
d) au moins un éther dialkylique de polyéthylèneglycol ayant la structure de Formule A :

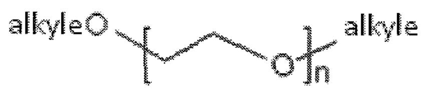

Formule A

**2.** Un polymère tel que revendiqué dans la revendication 1 dans lequel le composé éther dialkylique de polyéthylèneglycol est de l'éther diméthylique de polyéthylèneglycol (PEG DME) ou de l'éther dibutylique de polyéthylèneglycol.

**3.** Un polymère tel que revendiqué dans l'une quelconque des revendications 1 et 2 dans lequel l'éther dialkylique de polyéthylèneglycol est présent dans une quantité allant de 2,5 à 10 % en poids des réactifs.

**4.** Un polymère tel que revendiqué dans n'importe quelle revendication précédente dans lequel l'éther dialkylique de polyéthylèneglycol a un poids moléculaire de 200 à 400.

**5.** Un polymère tel que revendiqué dans n'importe quelle revendication précédente dans lequel le mélange comprend au moins un polyéthylène glycol ayant un poids moléculaire de 5 000 à 8 000, de préférence de 6 000.

**6.** Un polymère tel que revendiqué dans l'une quelconque des revendications 1 à 4 dans lequel le mélange comprend au moins un polyol de formule I dans lequel au moins trois éléments parmi $X_1$, $X_2$, $X_3$, $X_4$ et $X_5$ sont chacun indépendamment un groupe polyoxyalkylène à terminaison OH, dans lequel de préférence le polyol est du glycérol, du triméthylpropane (TMP) ou de l'hexanetriol (HT).

**7.** Un polymère tel que revendiqué dans n'importe quelle revendication précédente comprenant au moins un diisocyanate sélectionné dans le groupe composé de méthylène dicyclohexyle diisocyanate, hexaméthylène diisocyanate, isophorone diisocyanate, toluène-2,4-diisocyanate, toluène-2,6-diisocyanate, mélanges de toluène-2,4 et 2,6-diisocyanates, éthylène diisocyanate, éthylidène diisocyanate, propylène-1,2-diisocyanate, cyclohexylène-1,2-diisocyanate, cyclohexylène-l,4-diisocyanate, m-phénylène diisocyanate, 4,4□ -biphénylène diisocyanate, 3,3□ -dichloro4,4□-biphénylène diisocyanate, 1,6-hexaméthylène diisocyanate, 1,4-tétraméthylène diisocyanate, 1,10-decaméthylène diisocyanate, cumène-2,4-diisocyanate, 1,5-naphtalène diisocyanate, 1,4-cyclohexylène diisocyanate, 2,5-fluorènediisocyanate et 4,4'-diphénylméthane diisocyanate polymérique ; ou comprenant au moins un polyisocyanate sélectionné dans le groupe composé de trimère (isocyanurate) trifonctionnel d'isophorone diisocyanate et de trimère (isocyanurate) trifonctionnel d'hexaméthylène diisocyanate et de 4,4'-diphénylméthane diisocyanate polymérique.

**8.** Un polymère tel que revendiqué dans n'importe quelle revendication précédente dans lequel l'allongeur de chaîne à terminaison OH est un diol, ayant la structure de formule II :

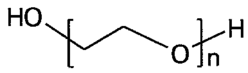

Formule II

dans laquelle n est un entier de 2 à 25, et
dans laquelle de préférence l'allongeur de chaîne à terminaison OH est sélectionné dans le groupe composé de triéthylène glycol, 1,4-butanediol, tétraéthylène glycol, diéthylène glycol, triéthylène glycol (TEG), éthylène glycol, hexanediol, propylène glycol, 2-éthylhexanediol-1,6, éther de néopentylglycol hydroquinone bis(2-hydroxyéthyl), dipropylène glycol, 2-méthyl-2-éthyl-1,3-propanediol, 2-éthyl-1,3-hexanediol, 1,5-pentanediol, thiodiglycol, 1,3-propanediol, 1,3-butanediol, 2,3-butanediol, 1,2-diméthyl-1,2-cyclopentanediol, 1,2-cyclohexanediol, 1,2-diméthyl-1,2-cyclohexanediol, 1,2,4-butanetriol, glycols aromatiques-aliphatiques tels que bis-1,4((3-hydroxyéthoxy)benzène, et des polymères d'oxyde d'éthylène et des copolymères d'oxyde d'éthylène avec de l'oxyde de propylène ayant une moyenne en nombre inférieure ou égale à 1 000.

**9.** Un polymère selon n'importe quelle revendication précédente qui comprend en outre un ou plusieurs antioxydants, catalyseurs, agents de nuançage ou bloqueurs d'UV.

**10.** Un polymère tel que revendiqué dans la revendication 9 dans lequel le mélange comprend de 1 à 3 % en poids d'antioxydant.

**11.** Un hydrogel polyuréthane comprenant le polymère de n'importe quelle revendication précédente sous forme hydratée.

**12.** Un processus pour préparer un hydrogel polyuréthane, ledit processus comprenant :

i. préparer un mélange de :
soit

ai) au moins un polyéthylène glycol ; et
aii) au moins un diisocyanate ; soit
bi) au moins un polyol de formule I,

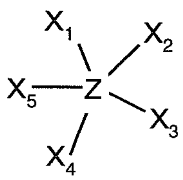

dans laquelle au moins trois éléments parmi $X_1$, $X_2$, $X_3$, $X_4$ et $X_5$ sont chacun indépendamment un groupe à terminaison OH, et les éléments restants de $X_1$, $X_2$, $X_3$, $X_4$ et $X_5$ sont chacun indépendamment H ou absents, et Z est une unité de liaison centrale, et
bii) au moins un diisocyanate ou polyisocyanate,

c) facultativement au moins un allongeur de chaîne à terminaison OH, et
d) au moins un éther dialkylique de polyéthylèneglycol ayant la structure de Formule A ;

ii) laisser le mélange formé à l'étape i. réagir de façon appropriée pour former un xérogel polyuréthane réticulé ; et
iii) hydrater le xérogel à l'aide d'un milieu aqueux pour former un hydrogel.

**13.** Un processus pour préparer un xérogel polyuréthane sous la forme d'un article moulé, de préférence sous la forme d'une lentille de contact, comprenant les étapes de :

i) préparer un mélange de
soit

ai) au moins un polyéthylène glycol ; et
aii) au moins un diisocyanate ; soit
bi) au moins un polyol de formule I,

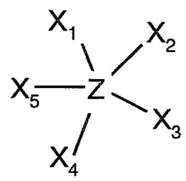

I

dans laquelle au moins trois éléments parmi $X_1$, $X_2$, $X_3$, $X_4$ et $X_5$ sont chacun indépendamment un groupe à terminaison OH, et les éléments restants de $X_1$, $X_2$, $X_3$, $X_4$ et $X_5$ sont chacun indépendamment H ou absents, et Z est une unité de liaison centrale, et
bii) au moins un diisocyanate ou polyisocyanate,
c) facultativement au moins un allongeur de chaîne à terminaison OH, et
d) au moins un éther dialkylique de polyéthylèneglycol ayant la structure de Formule A ;

ii) distribuer le mélange de réaction formé à l'étape i) dans un moule ;
iii) laisser le mélange de réaction réagir et durcir ;
iv) retirer l'article moulé du moule ; et
v) hydrater l'article moulé.

**14.** Utilisation d'un polymère selon l'une quelconque des revendications 1 à 10, ou d'un hydrogel polyuréthane selon la revendication 11 dans la préparation d'une lentille de contact.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 3786034 A
- US 3821186 A
- US 4136250 A
- US 4454309 A
- US 4359553 A
- US 6930196 B
- US 4644033 A
- US 5932200 A
- US 4885966 A
- US 5175229 A